(19) Europäisches Patentamt

European Patent Office

Office européen des brevets

(11) **EP 0 722 097 B1**

(12) **FASCICULE DE BREVET EUROPEEN**

(45) Date de publication et mention
de la délivrance du brevet:
**01.12.1999 Bulletin 1999/48**

(51) Int Cl.⁶: **G01V 3/28**

(21) Numéro de dépôt: **96400039.2**

(22) Date de dépôt: **08.01.1996**

(54) **Dispositif de mesure à induction en présence de parois métalliques**

Vorrichtung zur Induktions-Bohrlochmessung in Gegenwart von metallischen Wänden

Device for induction logging in the presence of metallic walls

(84) Etats contractants désignés:
DE GB

(30) Priorité: **10.01.1995 FR 9500200**

(43) Date de publication de la demande:
**17.07.1996 Bulletin 1996/29**

(73) Titulaire: **COMMISSARIAT A L'ENERGIE ATOMIQUE**
**75015 Paris (FR)**

(72) Inventeurs:
• **Locatelli, Marcel**
**F-38330 Montbonnot (FR)**
• **Chaillout, Jean-Jacques**
**F-38960 Saint Etienne de Crossey (FR)**
• **Jeandey, Christian**
**F-38120 Saint-Egreve (FR)**

(74) Mandataire: **Moutard, Pascal Jean et al**
**c/o Brevatome,**
**25, rue de Ponthieu**
**75008 Paris (FR)**

(56) Documents cités:
**EP-A- 0 434 439**       **EP-A- 0 618 463**
**US-A- 3 277 363**       **US-A- 5 283 520**

## Description

<u>Domaine technique</u>

La présente invention se rapporte au domaine de la mesure et de la caractérisation d'un milieu, à l'aide d'un dispositif à induction, et en présence d'une paroi métallique.

Ce type de mesure se rencontre en particulier dans le domaine de la caractérisation des formations géologiques traversées par un puits tubé. La connaissance de certains paramètres électriques ou magnétiques de ces formations géologiques (par exemple la résistivité électrique ou la perméabilité magnétique) est d'un très grand intérêt dans le domaine de l'exploration et de l'exploitation pétrolière. En particulier, dans le domaine de l'exploitation, la connaissance de l'interface eau-huile est primordiale. Dans le cas de puits utilisant des boues à l'huile, la technique par induction est la seule exploitable.

L'invention peut aussi s'appliquer au domaine du contrôle dans les centrales nucléaires.

<u>Etat de l'art antérieur</u>

Le document US-A-5 038 107 décrit un dispositif de configuration générale axiale comprenant en particulier un saturateur avec concentreur de flux, ainsi que des ferrites de focalisation de l'induction.

Dans ce type de dispositif, la présence de la paroi entre le dispositif de mesure et l'objet à mesurer (le milieu situé au-delà de la paroi métallique) se traduit par un phénomène d'écran lié à l'apparition des courants de Foucault dans la paroi. Le signal est donc atténué suivant une loi exponentielle :

$$S=S_0 \cdot e^{(-t/\delta)},$$

où t est l'épaisseur de la paroi et $\delta$ l'épaisseur de peau.

L'épaisseur $\delta$ est donnée par la formule :

$$\delta=1/(\mu\ \sigma\ \epsilon\ \omega/2)^{\frac{1}{2}}$$

où $\mu$ est la perméabilité magnétique, $\sigma$ la conductivité électrique, $\epsilon$ la permittivité diélectrique et $\omega$ la pulsation (=$2\pi f$, f étant la fréquence du courant).

Afin de réduire l'effet d'écran, une solution consiste à réduire la perméabilité $\mu$ en superposant un champ magnétique statique. Le coefficient de réduction est alors de l'ordre de $10/\mu$, c'est-à-dire de l'ordre de 20.

Pour cela, un saturateur est utilisé, et c'est ce qui est décrit dans le document US-A-5 038 107.

Cependant, la présence de la paroi continue toujours par se traduire par un phénomène d'écran.

D'une façon générale, il est nécessaire de trouver un dispositif et un procédé qui permettent de résoudre le problème de l'effet d'écran dû à une paroi métallique située entre un dispositif de mesure par induction et le milieu à mesurer.

Dans le cas du dispositif décrit dans le document US-A-5 038 107, les éléments sont fortement impliqués, la zone à saturer doit recouvrir l'ensemble du dispositif, la force de contact due à l'attraction magnétique est limitée aux déformations des balais, le dispositif étant centré. Enfin, il est nécessaire d'adapter le diamètre extérieur des balais au diamètre du tube.

<u>Exposé de l'invention</u>

La présente invention résout le problème de la présence d'une paroi métallique située entre un dispositif de mesure par induction et un milieu à mesurer.

A cette fin, elle a pour objet un dispositif de mesure par induction- d'un milieu, en présence d'une paroi métallique, comportant :

- des moyens d'émission permettant d'induire un signal dans le milieu au-delà de la paroi métallique,
- des moyens de réception d'un signal réémis par le milieu, en réponse au signal induit,

caractérisé en ce que les moyens d'émission sont constitués par au moins un générateur de courant connecté directement à la paroi métallique de façon à ce que le courant passant dans la paroi induise un signal au-delà de la paroi.

Avec ce dispositif, la paroi est utilisée comme émetteur et cela se traduit par une réduction d'un facteur égal à $e^2$, soit environ 7, du coefficient d'atténuation du signal. Avec ce dispositif, la paroi est traversée seulement une fois par le signal réémis à partir du milieu à mesurer en direction des moyens de réception.

Dans ce cas la partie de la paroi traversée par le courant du générateur n'a pas à être saturée, d'où une réduction de l'énergie magnétique nécessaire au système.

Dans le cadre de cette invention, et afin de résoudre le sous-problème consistant à établir un bon contact entre le générateur et la paroi, l'invention propose, selon un mode de réalisation particulier, un dispositif tel que décrit ci-dessus dans lequel un contact frottant est établi entre le générateur et la paroi métallique.

Le contact est encore amélioré si les contacts frottants présentent une surface rugueuse.

De façon à faciliter l'application des contacts frottants entre les générateurs et la paroi, les contacts peuvent être appliqués par l'intermédiaire d'aimants.

Dans le cas d'une paroi magnétique, et afin de s'affranchir de l'effet d'écran de la paroi lors de la réception du signal, l'invention a également pour objet, selon un mode particulier de réalisation, un dispositif tel que décrit ci-dessus et comportant en outre des moyens pour saturer magnétiquement une partie de la paroi, située entre une portion du milieu à mesurer et les moyens de réception.

Ainsi, une saturation partielle de la paroi est réalisée. Sachant que, pour saturer une paroi il faut beaucoup d'énergie magnétique, une saturation partielle réduit la quantité d'aimants nécessaires à l'obtention d'une bonne mesure. Ceci permet d'optimiser l'énergie magnétique à fournir en fonction de la configuration des éléments de mesure.

Les moyens de saturation peuvent être constitués par au moins un circuit magnétique destiné à être appliqué directement contre la paroi métallique, lors de la mesure par induction. Avec ce dispositif, il y a alors une force d'attraction magnétique directe entre la paroi métallique et les circuits magnétiques, ce qui permet de réduire les entrefers entre les moyens de saturation et la paroi, et donc les pertes dans l'énergie magnétique qui est nécessaire à la saturation de la paroi. En outre, du fait du contact magnétique direct paroi-moyens de saturation, l'efficacité du dispositif de mesure ne dépend pas de la forme interne de la paroi, ni des irrégularités qui peuvent l'affecter. Ainsi, si la paroi est un tube métallique magnétique dans un forage, l'efficacité du dispositif ne dépend pas du diamètre interne du tube, ni des irrégularités qui peuvent affecter ce diamètre. Il est donc possible d'utiliser le même saturateur pour différents diamètres de tubes.

Un tel circuit magnétique peut se présenter sous la forme d'une partie médiane longitudinale avec deux extrémités latérales qui sont incurvées par rapport à la partie médiane et qui sont terminées chacune par une surface destinée à être en contact avec la paroi métallique.

La partie médiane peut être constituée soit d'un matériau magnétique doux formant le noyau d'un électroaimant, soit d'un matériau magnétique dur jouant le rôle d'aimant permanent, soit d'une combinaison des deux.

Selon un autre mode particulier de réalisation, lorsque la paroi est une paroi cylindrique, par exemple la paroi d'un puits tubé, il est possible de disposer au moins deux éléments de saturation tels que décrits ci-dessus, les parties médianes des différents circuits magnétiques étant toutes parallèles entre elles.

Des moyens de réception peuvent alors être répartis à l'intérieur d'un volume ayant une forme sensiblement cylindrique, les parties médianes des différents circuits magnétiques définissant des génératrices de ce volume sensiblement cylindrique.

Selon un autre mode particulier de réalisation, un circuit magnétique peut présenter :

- une partie centrale en forme de plaque,
- deux parties latérales dont l'extrémité est prévue pour venir en contact avec la paroi intérieur d'un tube, suivant une zone parallèle à l'axe de ce tube.

La partie centrale peut être constituée soit d'un matériau magnétique doux formant le noyau d'un électroaimant, soit d'un matériau magnétique dur jouant le rôle d'aimant permanent, soit d'une combinaison des deux.

De manière alternative, la partie centrale peut être constituée de tôle métallique, et les parties latérales peuvent être constituées chacune par des tôles métalliques ou par des éléments métalliques faisant ressort. Ceci permet de résoudre le problème de l'adaptation du contact entre les parties latérales et la paroi lorsque cette dernière présente des irrégularités.

En outre, des découpes peuvent être pratiquées dans au moins une partie latérale, ces découpes assurant une adaptation encore meilleure de chaque circuit magnétique à la surface de la paroi.

Selon un autre aspect, dans le cadre de cet autre mode de réalisation, les moyens de saturation contiennent deux circuits magnétiques tels qu'ils viennent d'être décrits ci-dessus, disposés sensiblement parallèlement.

Les moyens de détection peuvent alors être disposés entre deux circuits et/ou entre au moins un des circuits et la paroi.

Selon un autre aspect, toujours dans le cadre de ce mode de réalisation plusieurs ensembles de saturateurs, chacun étant constitué tel que décrit ci-dessus, peuvent être prévus, les différents ensembles étant disposés sur un axe commun, à une certaine distance l'un de l'autre, et des moyens de détection étant situés dans l'espace libre entre deux ensembles voisins.

Cette configuration permet de laisser plus d'espace pour les moyens de détection, et également d'utiliser des circuits magnétiques plus volumineux, qui permettent d'injecter plus d'énergie magnétique dans la paroi à saturer. En effet, dans la configuration suivant laquelle les moyens de détection sont situés entre deux circuits magnétiques, le volume disponible pour ces circuits est forcément limité. Si cette limitation pose problème, la configuration alternée saturateur-moyens de détection-saturateur est particulièrement bien adaptée.

Deux circuits d'un même ensemble de saturateurs peuvent alors être disposés de façon à avoir une même orientation magnétique. Dans ce cas, les orientations magnétiques de deux ensembles voisins peuvent être à 180° l'une de l'autre, ou bien à 90° l'une de l'autre. On obtient alors une saturation du type axial.

Selon une variante, dans chaque ensemble de saturateur, les deux circuits magnétiques peuvent être disposés de façon à avoir une orientation magnétique opposée. On obtient alors une configuration radiale.

Le générateur de courant peut être en contact avec la paroi métallique en des points situés d'un côté d'un ensemble de saturation et en des points situés de l'autre côté de cet ensemble.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 illustre le principe de l'invention pour une paroi métallique plane,
- les figures 2A et 2B illustrent le principe de l'invention pour une paroi sensiblement cylindrique,
- la figure 3 représente un mode de réalisation de l'invention pour un puits tubé,
- les figures 4A et 4B représentent, dans le cadre de l'invention, un mode de réalisation d'un élément de saturation pour une paroi sensiblement plane,
- les figures 5A à 5C représentent d'autres modes de réalisation d'éléments de saturation pour une paroi sensiblement plane,
- les figures 6A et 6B représentent des vues en coupe et de dessus d'un dispositif selon l'invention, incorporant des saturateurs selon un premier mode de réalisation, en situation dans un puits tubé,
- les figures 7A et 7B représentent des vues de dessus et en coupe d'un dispositif selon l'invention, incorporant des éléments de saturation selon un second mode de réalisation, en situation dans un puits tubé,
- les figures 8A et 8B représentent deux variantes possibles des circuits magnétiques d'un saturateur pour un dispositif selon l'invention,
- la figure 9 représente un mécanisme pour écarter des saturateurs de la paroi,
- les figures 10A à 11B représentent deux autres configurations possibles pour les saturateurs, qui sont alternés suivant un axe longitudinal dans un puits tubé,
- la figure 12 représente un autre mode de réalisation de l'invention.

Description détaillée de modes de réalisation de l'invention

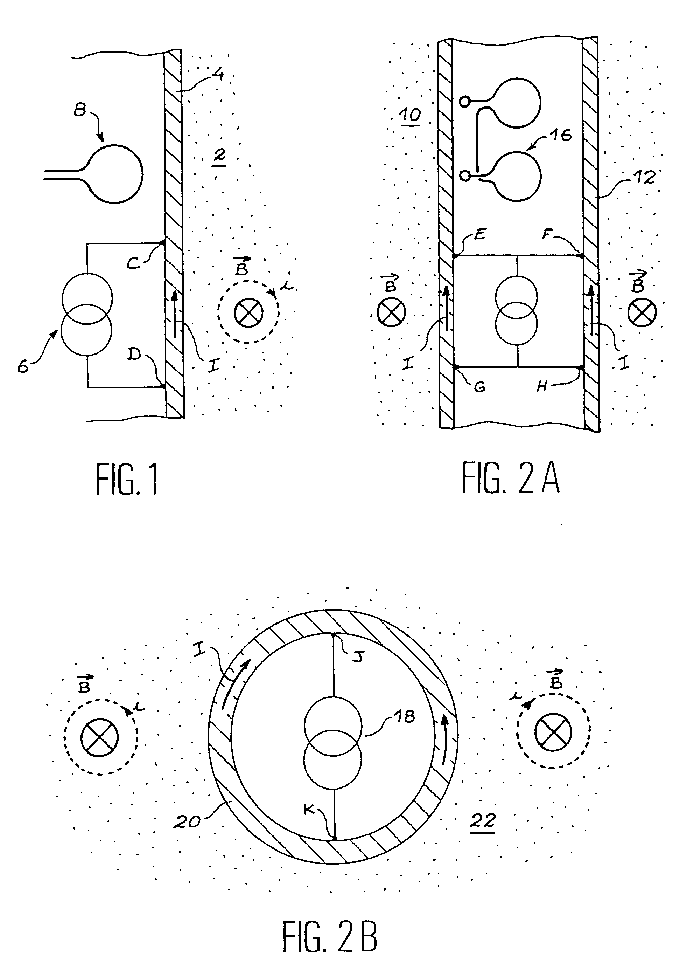

Un premier mode de réalisation est illustré sur la figure 1, pour le cas où un milieu à mesurer 2 est situé au-delà d'une paroi 4 métallique, par exemple de forme sensiblement plane dans la région où est effectuée la mesure. Un générateur de courant 6 est connecté en deux points C et D à la paroi, de telle sorte qu'un courant I circule dans la portion de la paroi qui ferme le circuit avec le générateur 6. Ce courant passant dans la paroi produit une induction B de l'autre côté de la paroi, dans la zone à mesurer du milieu 2. Bien sûr, le courant du générateur et les amenées de courant produisent une induction au-delà de la paroi mais cette induction est atténuée du fait de la paroi qui joue le rôle d'écran. L'induction au-delà de la paroi est principalement due au courant dans celle-ci. A son tour, cette induction B produit des courants de Foucault i dans un plan perpendiculaire à la paroi 4 et dans le même plan que le courant I délivré par le générateur 6.

Ces courants de Foucault sont détectés par une ou plusieurs bobines de détection 8. Pour avoir une bonne sensibilité les spires de la ou des bobines de détection sont de préférence situées dans le même plan que la boucle formée par le générateur de courant 6 et la paroi 4. Sur la figure 1 une seule bobine 8 est représentée. En fait, dans ce cas, l'unique bobine détecte d'une part une induction directe produite par le générateur 6 et d'autre part le signal réémis par le milieu à mesurer en réponse à la génération de l'induction B. Or, dans le signal total, la contribution de l'induction produite directement par le générateur 6 peut être considérablement plus élevée que la contribution du signal que l'on cherche à mesurer (il peut même être de l'ordre $10^6$ fois supérieur). Afin de résoudre le problème de ce couplage direct générateur-bobine, une solution consiste à monter deux bobines réceptrices en opposition, de façon à ce que les couplages directs avec l'émetteur soient égaux dans les deux bobines.

L'ensemble des moyens d'émission et de détection est relié électriquement, par des moyens de connexion électriques, tels que par exemple des câbles, à des moyens de commande, et de réception d'analyse et/ou de mémorisation des données disposés en un endroit éloigné de la zone à mesurer. Ces moyens ne seront pas décrits plus en détail et sont par ailleurs connus de l'homme de l'art. Ceci vaut également pour tous les modes de réalisation décrits par la suite.

La figure 2A représente un dispositif selon l'invention, dans le cas où le milieu à mesurer 10 se situe au-delà d'une paroi métallique 12 de forme sensiblement cylindrique, telle que le tubage métallique d'un puits. De telles configurations se rencontrent dans les forages qui traversent des formations géologiques. Le dispositif comporte un générateur de courant 14 connecté à la paroi 12 en plusieurs points, par exemple en quatre points EFGH. Un circuit fermé est donc établi, qui comprend une portion de la paroi cylindrique, portion dans laquelle va circuler un courant I. Ce courant produit une induction B au-delà de la paroi, dans la partie du milieu 10 que l'on cherche à étudier. De la même manière que dans le cas d'une paroi plane, une ou des bobines de détection 16 sont prévues, de préférence des bobines montées en opposition de façon à ce que les couplages des deux bobines avec les signaux émis soient égaux.

La figure 2B concerne encore un dispositif pour étudier un milieu situé au-delà d'une paroi métallique de forme sensiblement cylindrique. Selon cette autre configuration, un générateur de courant 18 est mis en contact avec deux points de la paroi 20 située dans un même plan perpendiculaire à l'axe du puits, par exemple deux points J et K diamétralement opposés. Un courant I va alors circuler dans la paroi 20, mais dans un plan sensiblement perpendiculaire à l'axe du puits tubé. Comme dans les cas décrits ci-dessus, ceci a pour conséquence la génération d'une induction magnétique B dans la zone 22 du milieu que l'on cherche à étudier, qui va produire à son tour des courants de Foucault i dans un plan sensibl-ement perpendiculaire à l'axe du puits tubé. Ces courants de Foucault sont alors détectés par des bobines de détection, non représentées sur la figure 2B. Pour avoir une bonne sensibilité les spires de ces bobines seront encore situées de préférence dans le même plan que la boucle formée par le générateur de courant et le courant I. Là encore, on pourra avoir recours au montage de deux bobines réceptrices en opposition de façon à s'affranchir de l'induction directe produite par le générateur 18 dans les bobines de réception.

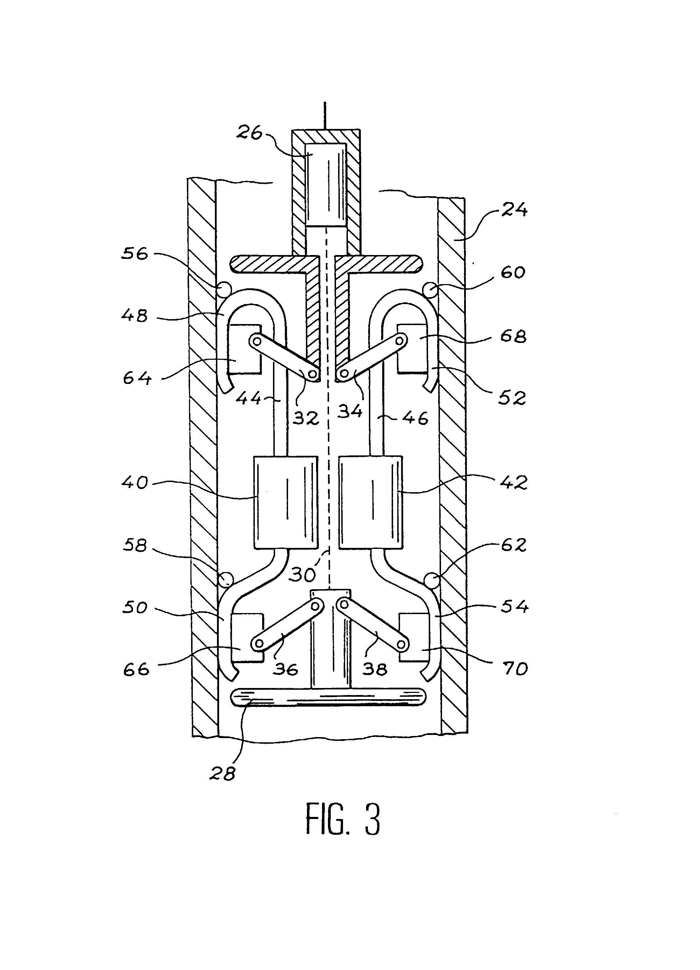

La figure 3 illustre un mode de réalisation de l'invention, dans le cas où la paroi métallique 24 a une forme sensiblement cylindrique. L'appareil comporte des moyens pour amener au contact de la paroi des moyens de connexion d'au moins un générateur de courant et pour les éloigner de la paroi lors d'un déplacement de l'appareil.

Selon un mode particulier, un vérin électrique 26 permet de remonter ou de descendre un espaceur 28 par l'intermédiaire d'un câble 30. Le mouvement de remontée entraîne un repliement des bras 32, 34, 36, 38. De chaque côté du câble 30, ce mouvement commande celui d'un ensemble constitué par un générateur de courant 40, 42 et des moyens pour amener le courant dans la paroi, par exemple un câble souple 44, 46 dont les extrémités 48, 50, 52, 54 assurent un contact électrique avec la paroi métallique 24. Au voisinage des points de contact avec la paroi, peuvent être fixés directement sur chaque câble souple 44, 46 des moyens 56, 58, 60, 62 pour nettoyer la surface du tube au fur et à mesure du déplacement de l'appareil, ce qui permet d'assurer un bon contact entre cette surface intérieure et les extrémités des câbles souples. Chacun de ces moyens de nettoyage peut être une lime réalisée en un matériau dur et rugueux, par exemple en céramique. Par ailleurs, les extrémités 48, 50, 52, 54 des câbles souples 44, 46 destinées à être en contact avec la paroi présenteront de préférence une surface rugueuse de façon à améliorer le contact. Enfin, dans le cas où le tube 24 est constitué d'un matériau à la fois métallique et magnétique, des aimants 64, 66, 68, 70 peuvent être prévus, par exemple au voisinage de chaque extrémité des câbles souples, l'effet de ces aimants étant de permettre une meilleure application des extrémités des câbles au point de contact avec la paroi et ceci grâce à l'attraction magnétique entre l'aimant et la paroi magnétique. L'utilisation de contacts frottants, présentant une surface rugueuse, et/ou de moyens pour nettoyer la surface intérieure du tube est particulièrement avantageuse dans le cas où ce dispositif est utilisé dans un puits, par exemple un puits pétrolier en cours d'exploitation, dans lequel il peut y avoir présence de liquide ou de matières accumulés sur la paroi, notamment d'huile.

Dans le cas où la paroi métallique, de forme quelconque, est une paroi magnétique, il est avantageux de réaliser une saturation magnétique de la zone de la paroi située entre la zone intéressante du milieu à mesurer et les moyens de détection. Ceci permet de rendre la paroi magnétiquement transparente.

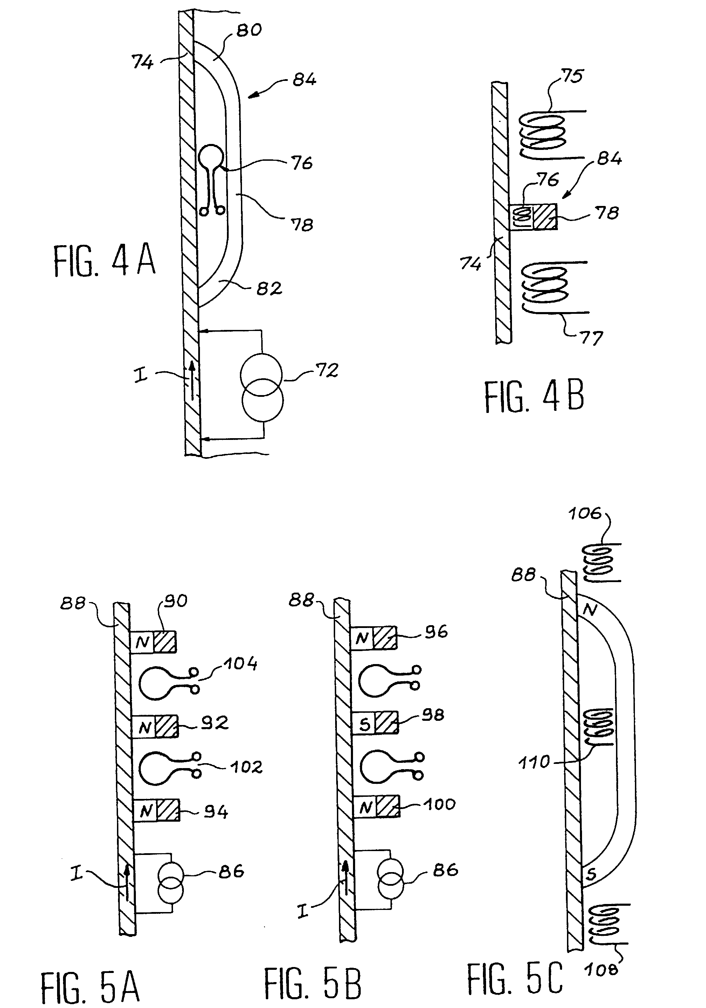

Dans le cas d'une paroi de forme sensiblement plane, un dispositif de saturation magnétique de la paroi est illustré sur les figures 4A et 4B. Sur la figure 4A, la référence 72 désigne un générateur de courant, tel que celui qui a été décrit ci-dessus, par exemple en liaison avec la figure 1, et qui permet d'injecter un courant I dans une paroi 74. Une bobine de détection 76 est située à proximité de la paroi. Afin de supprimer l'effet d'écran magnétique de la paroi, un saturateur-est prévu qui est constitué par une partie médiane longitudinale 78 prolongée par deux extrémités latérales 80, 82 incurvées par rapport à la partie médiane et qui sont terminées chacune par une surface destinée à être en contact avec la paroi métallique 74. La partie médiane est constituée soit d'un matériau magnétique doux formant le noyau d'un électroaimant non représenté sur la figure, soit d'un matériau magnétique dur jouant le rôle d'aimant permanent, soit d'une combinaison des deux. Le même dispositif est représenté sur la figure 4B, où le saturateur 84 est vu de dessus en coupe suivant un plan perpendiculaire à la paroi 74 et à la partie médiane 78. Le générateur de courant, situé sous l'élément saturateur 84 sur la figure 4A n'est pas représenté sur la figure 4B. Outre la bobine de détection 76, ou bien en remplacement de celle-ci, peuvent prévues des bobines de détection 75, 77 disposées de part et d'autre du saturateur 84 et qui bénéficient également de l'effet de saturation produit par ce dernier dans la paroi. Sur les figures 4A et 4B un seul élément de saturation 84 a été représenté. Mais plusieurs éléments tels que celui représenté sur la figure 4A peuvent être disposés parallèlement entre eux, de façon à élargir la zone de la paroi 74 dans laquelle il y a saturation magnétique.

Les figures 5A et 5B représentent un dispositif fonctionnant toujours sur le même principe conforme à l'invention, avec un générateur de courant 86 pour faire circuler un courant I dans la paroi 88 qui est de forme sensiblement plane. Plusieurs éléments de saturation 90, 92, 94 sont appliqués contre la paroi, chacun étant constitué de manière identique à l'élément de saturation 84 décrit sur la figure 4A, c'est-à-dire comprenant une partie médiane longitudinale prolongée par deux extrémités latérales qui sont incurvées par rapport à la partie médiane et qui sont terminées chacune par une surface destinée à être en contact avec la paroi métallique 88. Chaque circuit magnétique peut être un circuit alimenté par un électroaimant, ou un aimant permanent, par exemple en AlNiCo, ou une combinaison des deux. A l'intérieur de la pluralité de circuits magnétiques, deux circuits magnétiques voisins peuvent être disposés de façon à avoir une même orientation magnétique, comme sur la figure 5A ou une orientation magnétique à 180° l'une de l'autre, comme sur la figure 5B. Par ailleurs, l'écart entre deux circuits magnétiques voisins peut être déterminé à volonté. Ces différents paramètres (écart, direction de polarisation) détermineront les différents chemins pour la circulation du flux de saturation magnétique. Par ailleurs, il est clair qu'il est également possible d'utiliser un seul élément de saturation, tel que l'élément 94 sur la figure 5A, sans utiliser d'autres éléments tels que les éléments 90, 92. La zone de saturation magnétique est alors évidemment plus limitée.

Les bobines de détection seront disposées de préférence à proximité de la paroi 88. Elles peuvent être disposées soit entre deux éléments de saturation voisins, comme par exemple les bobines 102, 104 sur la figure 5A, soit à proximité d'une ou des extrémités latérales d'un élément de saturation, comme les bobines 106, 108 représentées sur la figure 5C, qui est une vue de dessus d'un des éléments de saturation d'une des figures 5A ou 5B, soit directement entre la partie médiane d'un élément de saturation et la paroi 88, comme la bobine 110 de la figure 5C. Toutes les combinaisons de ces différentes positions pour les bobines de détection sont également possibles.

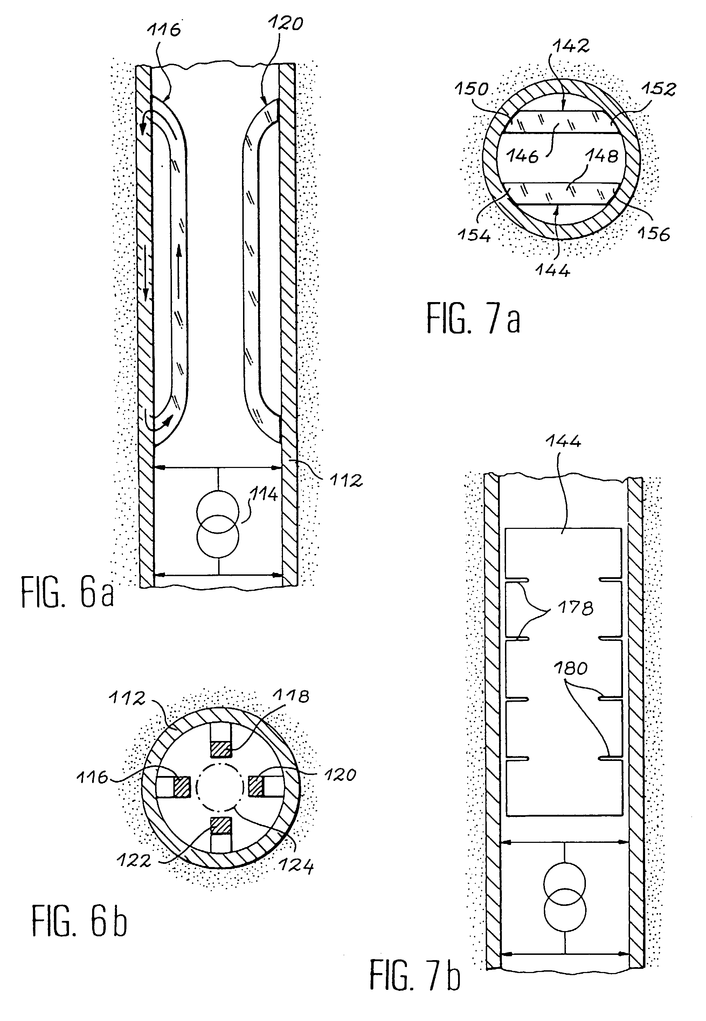

Les figures 6A et 6B représentent la disposition des éléments de saturation pour une paroi 112 métallique, magnétique, de forme sensiblement cylindrique, telle que le tubage d'un puits de forage. Un générateur de courant 114 disposé en contact avec la paroi, selon une des configurations décrites ci-dessus en liaison avec les figures 2A et 2B, injecte un courant I dans cette paroi. Les éléments de saturation 116, 118, 120, 122 permettent de saturer une zone du puits dans laquelle sont disposées une ou plusieurs bobines de détection par ailleurs non représentées sur les figures. Les éléments de saturation ont une forme et une constitution similaires à celles qui ont été décrites ci-dessus en liaison avec la figure 4A. Quatre éléments de saturation ont été représentés sur les figures 6A et 6B. Selon une variante, non représentée, il est également possible de disposer un seul élément, ou deux ou trois ou plus de quatre en contact avec la paroi. Dans le cas d'une paroi de forme sensiblement cylindrique, les parties médianes des différents circuits seront de préférence parallèles entre elles.

Du fait de l'existence de forces d'attraction magnétiques entre les éléments de saturation et la paroi, ce dispositif permet, d'une façon générale (que la paroi soit plane ou cylindrique) de réduire les entrefers entre les saturateurs et la paroi à pratiquement 0, et par conséquent de réduire l'énergie magnétique nécessaire à la saturation de la paroi. En outre, du fait que l'élément de saturation est appliqué directement contre la paroi, tout effet perturbateur lié à une variation de la surface de la paroi, ou dans le cas d'un tube lié à une variation du diamètre du tube, est supprimé.

Dans la configuration représentée sur les figures 6A et 6B, les bobines de détection peuvent être placées à tout endroit au voisinage de la portion de la paroi 112 qui est saturée magnétiquement, par exemple selon une disposition similaire à une de celles qui ont été décrites en liaison avec les figures 4A et 4B. Les bobines de réception peuvent également être disposées à l'intérieur d'un volume 124 (voir figure 6B) de forme approximativement cylindrique, et qu'il est possible de définir comme étant le volume qui vient s'appuyer sur les éléments longitudinaux des saturateurs, ces éléments longitudinaux définissant des génératrices du cylindre 124.

Selon un autre mode de réalisation, illustré sur les figures 7A et 7B, les éléments d'un ensemble de saturateurs sont constitués par deux circuits magnétiques 142, 144, chaque circuit présentant une partie centrale 146, 148 qui est sensiblement en forme de plaque, cette partie centrale étant prolongée par deux parties latérales 150, 152, 154, 156. L'extrémité de chacune de ces parties latérales est prévue pour venir en contact avec la paroi intérieure du tube, suivant une zone parallèle à l'axe du tube.

La partie centrale est constituée soit d'un matériau magnétique doux formant le noyau d'un électroaimant non représenté sur les figures, soit d'un matériau magnétique dur jouant le rôle d'aimant permanent, soit d'une combinaison des deux.

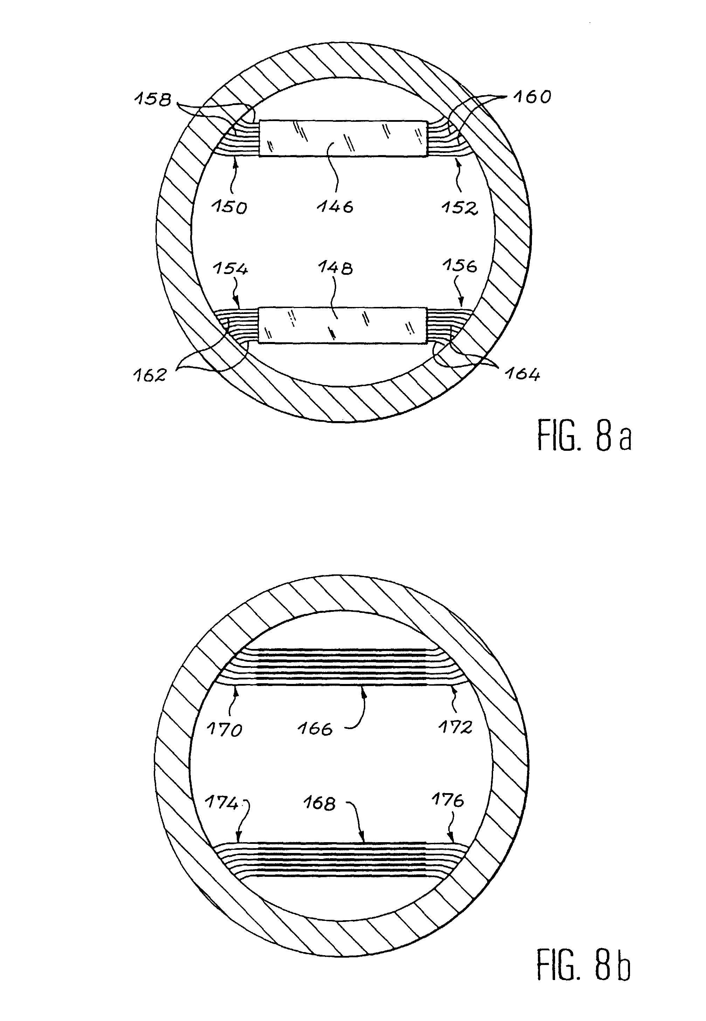

Comme illustré sur la figure 8A, les parties latérales 150, 152, 154, 156 peuvent être constituées par des tôles magnétiques 158, 160, 162, 164 présentant une certaine élasticité. L'utilisation de ces tôles permet de résoudre le problème du contact magnétique entre le circuit magnétique et la paroi du tube, lors de la présence d'irrégularités : l'élasticité des tôles permet aux extrémités des parties latérales de s'adapter aux différentes configurations de surface rencontrées.

Selon une variante, illustrée sur la figure 8B, la partie centrale, en forme de plaque 166, 168, peut elle-même être constituée de tôles magnétiques. Par ailleurs, la partie centrale peut être prolongée par des lamelles métalliques formant ressort 170, 172, 174, 176, qui permettent de canaliser le flux magnétique en direction de la paroi. Ces lamelles peuvent être constituées d'un seul matériau magnétique et élastique ou d'un empilage approprié de lamelles de deux types : un type étant en matériau doux et l'autre en un matériau élastique. En outre, comme illustré sur la figure 7B qui représente un élément d'un saturateur, vu de côté, des encoches ou découpes 78, 80 peuvent être prévues sur les côtés de chaque saturateur, de façon à assurer un meilleur contact avec la paroi, au cas où des irrégularités seraient présentes dans celle-ci.

Dans le second mode de réalisation (figures 7A à 8B), les polarités de deux éléments saturateurs disposés en face l'un de l'autre peuvent être opposées ou identiques, ce qui permet d'obtenir des chemins différents pour le flux magnétique.

Dans tous les cas, les moyens mécaniques peuvent être utilisés pour éloigner les saturateurs de la paroi lors de la descente ou de la remontée du dispositif dans le puits de forage. Dans le cas d'un électroaimant, il sera en outre possible de couper le courant d'alimentation du circuit magnétique lors de ces opérations de descente et de remontée.

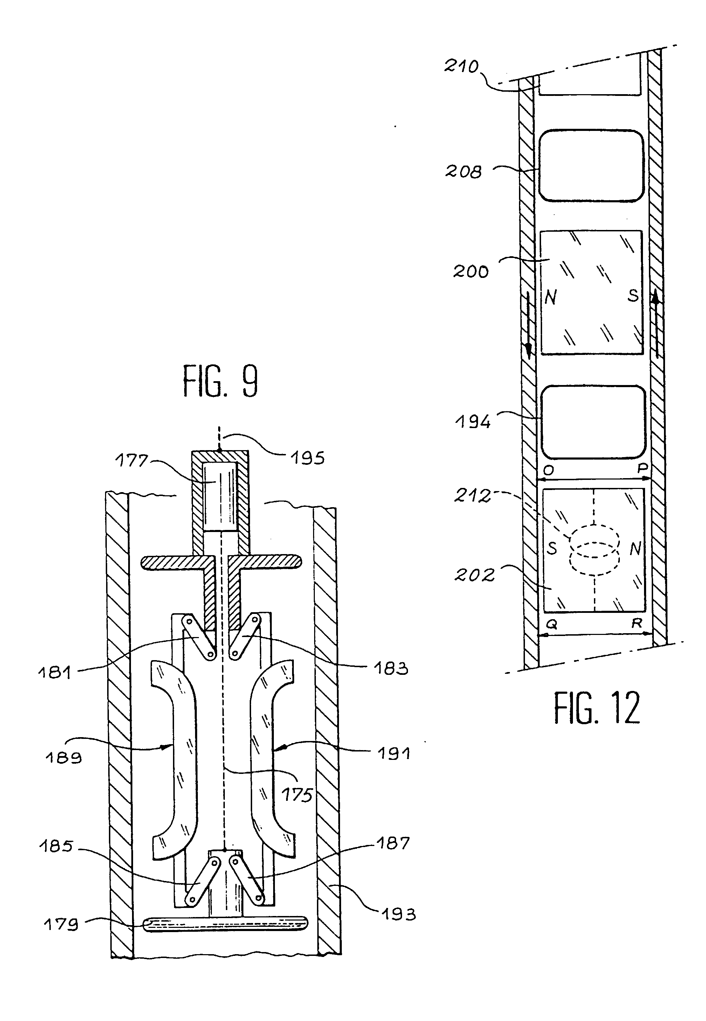

Un exemple d'un dispositif pour éloigner les circuits magnétiques de la paroi est illustré sur la figure 9. Un vérin électrique 177 permet de remonter un espaceur 179 par l'intermédiaire d'un câble 175. Le mouvement de remontée entraîne un repliement des bras 181, 183, 185, 187 et ramène les circuits 189, 191 vers l'axe de l'appareil et du tube 193 formant paroi. L'ensemble de l'appareil est suspendu à un câble 195. Les bobines de mesure ne sont pas représentées sur la figure 9, mais peuvent être disposées comme expliqué ci-dessus en liaison avec a figure 6A. Enfin, le même dispositif peut être utilisé pour des saturateurs selon le second mode de réalisation (figures 7A, 7B, 8A, 8B).

La fréquence maximale utilisable avec un dispositif selon la présente invention est de l'ordre de quelques kilohertz. En principe, l'intensité du signal croît avec la fréquence, et cette dernière est limitée du fait de l'effet de peau. Pour des dimensions standards de tubage, l'épaisseur radiale du volume de mesure est de l'ordre de quelques dizaines de centimètres, la fréquence étant ainsi limitée à quelques kilohertz.

Dans le cas où le circuit magnétique du saturateur est formé en partie de tôles, comme sur les figures 8A et 8B, et afin de limiter l'effet de court-circuit dû à la présence de ces tôles au voisinage des bobinages d'émission et de réception, l'épaisseur des tôles est préférentiellement de l'ordre de 2 à 3 fois supérieure à l'épaisseur sur laquelle se manifeste l'effet de peau dans le matériau constitutif des tôles, à la fréquence d'utilisation du dispositif. Ainsi, pour une fréquence de 10 kilohertz, les tôles devront avoir une épaisseur de quelques millimètres.

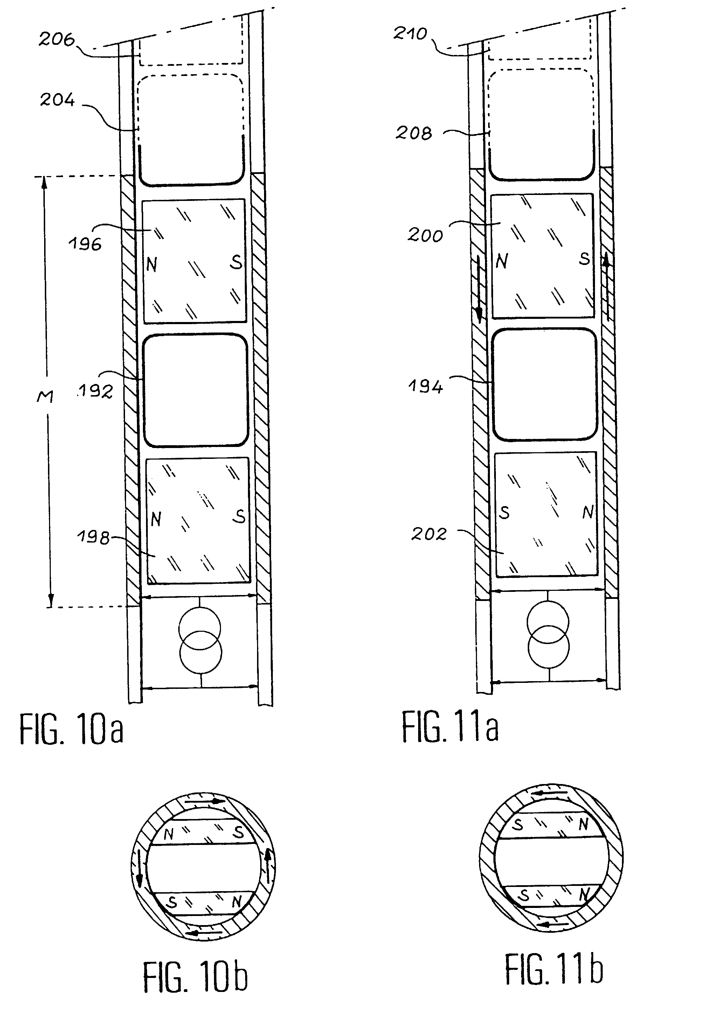

Deux autres configurations du dispositif, dans le cas du second mode de réalisation expliqué ci-dessus (saturateur en forme de plaque prolongé par des parties latérales dont l'extrémité vient en contact avec la paroi intérieure du tube) sont illustrées sur les figures 10A à 11B.

Sur ces figures, les références 192 et 194 représentent chacune,- de façon globale, un ensemble comprenant des moyens de réception d'un signal. Cet ensemble peut être par exemple un couple de bobines réception-contre-réception. De part et d'autre de cet ensemble, suivant une direction longitudinale parallèle au tube, se trouve deux ensembles de saturation 196, 198, 200, 202. Ces ensembles sont constitués de manière analogue à ceux décrits en liaisons avec les figures 7A, 7B, 8A, 8B. A l'intérieur d'un même ensemble, les polarités des deux circuits magnétiques constitutifs de cet ensemble peuvent être soit opposées (voir figure 10B), soit parallèles (voir figure 11B).

Dans le cas des figures 10A et 10B, où les circuits magnétiques d'un même saturateur sont de polarités opposées, le champ magnétique de saturation résultant a une configuration radiale, comme indiqué par les flèches sur le pourtour du tube de la figure 10B. Dans le cas où un ensemble de détection 192 est entouré de deux ensembles de saturation 196, 198, la zone saturée du tube est alors celle désignée par la lettre M sur la figure 10A. Il est possible d'ajouter, par exemple au-dessus de l'ensemble de saturation 196, un autre ensemble de détection 204, puis un autre saturateur 206, lui-aussi constitué de deux circuits magnétiques dont les polarités sont orientées comme celles des saturateurs 196, 198. On augmente alors la taille de la zone saturée du tube.

Dans la version de la figure 11A, les ensembles de saturation 200, 202 sont chacun constitués par deux circuits magnétiques dont la polarité est orientée de façon identique. Il en résulte un champ de saturation ayant une configuration axiale, dont le sens de circulation est celui décrit par les flèches sur les figures 11A et 11B. De même que dans le cas précédent, il est possible d'ajouter, au-dessus de l'élément saturateur 200, un autre élément 208 de détection, puis encore un autre élément 210 de saturation, constitué de la même manière que les éléments 200, 202. Deux éléments de saturation voisins, par exemple les éléments 200 et 202 peuvent avoir, comme illustré sur la figure 7A des directions de polarisation orientées à 180° l'une de l'autre. Mais on peut également orienter les directions de polarisation à 90° l'une de l'autre, ou suivant tout autre angle. Il en résulte à chaque fois des chemins différents pour la circulation du flux de saturation magnétique, que l'homme du métier saura adapter suivant les circonstances.

Il est évidemment possible de généraliser cet enseignement à un nombre N d'ensembles de saturation alternés avec des ensembles de réception des signaux réémis par le milieu à mesurer.

Les modes de réalisation décrits en liaison avec les figures 10A à 11B permettent de résoudre le problème de l'encombrement des saturateurs : lorsque l'énergie nécessaire pour saturer les parois est plus importante, il faut utiliser des saturateurs plus volumineux. Pour cela, on peut utiliser l'une des configurations étagées qui viennent d'être décrites.

Selon une variante des modes de réalisation décrits en liaison avec les figures 10A à 11B, il est également possible de mettre le générateur de courant en contact avec la paroi, mais avec des points de contact situés de part et d'autre d'un saturateur. Ceci est illustré sur la figure 12 où le générateur 212 est en contact en quatre points OPQR avec la paroi métallique, les points O et P étant situés au-dessus de l'ensemble de saturation 202, et les points Q et R sous cet ensemble. Cette configuration permet d'étudier différentes zones du milieu à étudier. Elle permet en particulier d'étudier des zones peu profondes de la formation géologique car, dans ce cas, les récepteurs sont proches de l'émetteur, la profondeur d'investigation étant sensiblement égale à la distance émetteur-récepteur. Les autres références numériques désignent sur cette figure des éléments identiques aux éléments correspondants de la figure 11A.

## Revendications

1. Dispositif de mesure par induction d'un milieu (2, 10, 22), en présence d'une paroi (4, 12, 20, 24, 74, 88, 112, 193) métallique, comportant :

   - des moyens d'émission (6, 14, 18, 72, 86, 212) permettant d'induire un signal dans le milieu au-delà de la paroi métallique,
   - des moyens de réception (8, 16, 75, 76, 77, 102, 104, 106, 108, 110) d'un signal réémis par le milieu, en réponse au signal induit,

   caractérisé en ce que les moyens d'émission sont constitués par au moins un générateur de courant connecté directement à la paroi métallique de façon à ce que le courant passant dans la paroi induise un signal au-delà de la paroi.

2. Dispositif selon la revendication 1, un contact frottant (48, 50, 52, 54) étant établi entre le générateur de courant et la paroi métallique (24).

3. Dispositif selon la revendication 2, les contacts frottants présentant une surface rugueuse.

4. Dispositif selon l'une des revendications 2 ou 3, les contacts frottants étant appliqués à l'aide d'aimants (64, 66, 68, 70).

5. Dispositif selon l'une des revendications 1 à 4, comportant en outre des moyens (84, 90 - 100, 116 - 122, 142, 144) pour saturer magnétiquement une partie de la paroi située entre une portion du milieu à mesurer et les moyens de réception.

6. Dispositif selon la revendication 5, les moyens de saturation étant constitués par au moins un circuit magnétique destiné à être appliqué directement contre la paroi métallique lors de la mesure par induction.

7. Dispositif selon la revendication 6, au moins un circuit magnétique présentant une partie médiane longitudinale et deux extrémités latérales qui sont incurvées par rapport à la partie médiane et qui sont terminées chacune par une surface destinée à être en contact avec la paroi métallique.

8. Dispositif selon la revendication 7, la partie médiane étant constituée soit d'un matériau magnétique doux formant le noyau d'un électroaimant, soit d'un matériau magnétique dur jouant le rôle d'aimant permanent, soit d'une combinaison des deux.

9. Dispositif selon la revendication 7 ou la revendication 8, comportant au moins deux circuits magnétiques (90 - 94, 96 - 100, 116 - 122), les parties médianes des différents circuits magnétiques étant toutes parallèles entre elles.

10. Dispositif selon la revendication 9, des moyens de réception étant répartis à l'intérieur d'un volume (124) ayant une forme sensiblement cylindrique, les parties médianes des différents circuits magnétiques définissant des génératrices de ce volume sensiblement cylindrique.

11. Dispositif selon la revendication 6, au moins un circuit (42, 144) présentant :

    - une partie centrale (146, 148) en forme de plaque,
    - deux parties latérales (150, 152, 154, 156) dont l'extrémité est prévue pour venir en contact avec la paroi intérieure d'un tube suivant une zone parallèle à l'axe du tube.

12. Dispositif selon la revendication 11, la partie centrale étant constituée soit d'un matériau magnétique doux formant le noyau d'un électroaimant, soit d'un matériau magnétique dur jouant le rôle d'aimant permanent, soit d'une combinaison des deux.

13. Dispositif selon la revendication 11, la partie centrale (166, 168) étant constituée de tôles magnétiques.

14. Dispositif selon l'une des revendications 11 à 13, les parties latérales (150, 152, 154, 156) étant constituées chacune par des tôles magnétiques (158, 160, 162, 164).

15. Dispositif selon l'une des revendication 11 à 13, les parties latérales (170, 172, 174, 176) étant constituées par des éléments métalliques faisant ressort.

16. Dispositif selon l'une des revendications 11 à 15, des découpes (78, 80) étant pratiquées dans au moins une partie latérale d'au moins un circuit magnétique (144).

17. Dispositif selon l'une des revendication 11 à 16, comportant deux circuits magnétiques, les deux circuits étant disposés sensiblement parallèlement.

18. Dispositif selon la revendication 17, comportant au moins un autre ensemble (198, 206) de saturation conformément à la revendication 17, les différents ensembles (196, 198, 206) étant disposés sur un axe commun, à une certaine distance l'un de l'autre, des moyens de réception (192, 204) étant situés dans chaque espace libre entre deux ensembles voisins de saturation.

**19.** Dispositif selon la revendication 18, les deux circuits magnétiques étant, dans chaque ensemble de saturation, disposés de façon à avoir une même orientation magnétique.

**20.** Dispositif selon la revendication 19, les orientations magnétiques de deux ensembles voisins étant à 180° l'une de l'autre.

**21.** Dispositif selon la revendication 19, les orientations magnétiques de deux ensembles voisins étant à 90° l'une de l'autre.

**22.** Dispositif selon la revendication 18, le générateur de courant (212) étant en contact avec la paroi métallique en des points (O, P) situés d'un côté d'un ensemble de saturation (202) et en des points (Q, R) situés de l'autre côté de cet ensemble (202).

**Claims**

**1.** Device for the measurement by induction of a medium (2, 10, 22) in the presence of a metal wall (4, 12, 20, 24, 74, 88, 112, 193) comprising:

- transmission means 96, 14, 18, 72, 86, 212) making it possible to induce a signal in the medium beyond the metal wall,
- reception means (8, 16, 75, 76, 77, 102, 104, 106, 108, 110) of a signal transmitted by the medium in response to the induced signal,

characterized in that the transmission means are constituted by at least one current generator connected directly to the metal wall in such a way that the current passing into the wall induces a signal beyond the wall.

**2.** Device according to claim 1, a rubbing contact (48, 50, 52, 54) being established between the current generator and the metal wall (24).

**3.** Device according to claim 2, the rubbing contacts having a rough surface.

**4.** Device according to either of the claims 2 and 3, the rubbing contacts being applied with the aid of magnets (64, 66, 68, 70).

**5.** Device according to any one of the claims 1 to 4, also having means (84, 90-100, 116-122, 142, 144) for magnetically saturating part of the wall located between a portion of the medium to be measured and the reception means.

**6.** Device according to claim 5, the saturation means being constituted by at least one magnetic circuit intended to be directly applied to the metal wall during the measurement by induction.

**7.** Device according to claim 6, at least one magnetic circuit having a median, longitudinal part and two lateral ends, which are inwardly curved relative to the median part and whereof each is terminated by a surface intended to come into contact with the metal wall.

**8.** Device according to claim 7, the median part being made either from a soft magnetic material forming the core of an electromagnet, or a hard magnetic material serving as a permanent magnet, or a combination of both.

**9.** Device according to either of the claims 7 and 8, having at least two magnetic circuits (90-94, 96-100, 116-122), the median part of the different magnetic circuits being parallel to one another.

**10.** Device according to claim 9, reception means being distributed within a volume (124) having a substantially cylindrical shape, the median parts of the different magnetic circuits defining generatrixes of said substantially cylindrical volume.

**11.** Device according to claim 6, at least one circuit (42, 144) having a central, plate-shaped part (146, 148), and two lateral parts (150, 152, 154, 156), whose end is intended to come into contact with the inner wall of a tube along an area parallel to the tube axis.

**12.** Device according to claim 11, the central part being made either from a soft magnetic material forming the core of an electromagnet, or a hard magnetic material serving as a permanent magnet, or a combination of both.

**13.** Device according to claim 11, the central part (166, 168) being constituted by magnetic sheets.

**14.** Device according to any one of the claims 11 to 13, the lateral parts (150, 152, 154, 156) being in each case constituted by magnetic sheets (158, 160, 162, 164).

**15.** Device according to any one of the claims 11 to 13, the lateral parts (170, 172, 174, 176) being constituted by metallic elements forming a spring.

**16.** Device according to any one of the claims 11 to 15, cutouts (78, 80) being made in at least one lateral part of at least one magnetic circuit (144).

**17.** Device according to any one of the claims 11 to 16, having two magnetic circuits, which are arranged substantially in parallel.

18. Device according to claim 17, having at least one saturation assembly (198, 206) according to claim 17, the different assemblies (196, 198, 206) being located on a common axis, at a certain distance from one another, reception means (192, 204) being located in each free space between two adjacent saturation assemblies.

19. Device according to claim 18, the two magnetic circuits being arranged in each saturation assembly in such a way as to have the same magnetic orientation.

20. Device according to claim 19, the magnetic orientations of two adjacent assemblies being at 180° from one another.

21. Device according to claim 19, the magnetic orientations of two adjacent assemblies being at 90° from one another.

22. Device according to claim 18, the current generator (212) being in contact with the metal wall at points (0, P) located on one side of a saturation assembly (202) and at points (Q, R) on the other side of said assembly (202).

**Patentansprüche**

1. Vorrichtung zur Induktionsmessung eines Mediums bzw. Materials (2, 10, 22) in Gegenwart einer metallischen Wand (4, 12, 20, 24, 74, 88, 112, 193), umfassend:

   - Sendeeinrichtungen (6, 14, 18, 72, 86, 212), die ermöglichen, ein Signal in dem Material jenseits der metallischen Wand zu induzieren,
   - Empfangseinrichtungen (8, 16, 75, 77, 102, 104, 106, 108, 110) eines durch das Material zurückgesendeten Signals, als Antwort auf das induzierte Signal,

   **dadurch gekennzeichnet**,
   daß die Sendeeinrichtungen durch wenigstens einen Stromerzeuger gebildet werden, der direkt mit der metallischen Wand verbunden ist, so daß der in der Wand fließende Strom jenseits der Wand ein Signal induziert.

2. Vorrichtung nach Anspruch 1, wobei ein Reibkontakt (48, 50, 52, 54) zwischen dem Stromerzeuger und der metallischen Wand (24) hergestellt ist.

3. Vorrichtung nach Anspruch 2, wobei die Reibkontakte eine rauhe Oberfläche aufweisen.

4. Vorrichtung nach einem der Ansprüche 2 oder 3, wobei die Reibkontakte mit Hilfe von Magneten (64, 66, 68, 70) angepreßt werden.

5. Vorrichtung nach einem der Ansprüche 1 bis 4, die außerdem Einrichtungen (84, 90 - 100, 116 - 122, 142, 144) umfassen, um ein Stück der Wand magnetisch zu sättigen, das sich zwischen einem zu messenden Teil des Materials und den Empfangseinrichtungen befindet.

6. Vorrichtung nach Anspruch 5, wobei die Sättigungseinrichtungen durch wenigstens einen Magnetkreis gebildet werden, der bei der Induktionsmessung direkt gegen die metallische Wand gedrückt wird.

7. Vorrichtung nach Anspruch 6, wobei wenigstens ein Magnetkreis ein längsgerichtetes Mittelstück und zwei seitliche Enden aufweist, die gekrümmt sind in bezug auf das Mittelstück und die beide mit einer für den Kontakt mit der metallischen Wand bestimmten Fläche enden.

8. Vorrichtung nach Anspruch 7, wobei das Mittelstück entweder aus einem magnetisch weichen Werkstoff besteht, der den Kern eines Elektromagneten bildet, oder aus einem magnetisch harten Werkstoff, der die Rolle eines Permanentmagneten spielt, oder aus einer Kombination der beiden.

9. Vorrichtung nach einem der Ansprüche 7 oder 8, wenigstens zwei Magnetkreise (90 - 94, 96 - 100, 116 - 122) umfassend, wobei die Mittelstücke der verschiedenen Magnetkreise alle parallel zueinander sind.

10. Vorrichtung nach Anspruch 9, wobei Empfangseinrichtungen im Innern eines Volumens (124) von im wesentlichen zylindrischer Form verteilt sind und die Mittelstücke der verschiedenen Magnetkreise Mantellinien dieses im wesentlichen zylindrischen Volumens definieren.

11. Vorrichtung nach Anspruch 6, wobei wenigstens ein Kreis (42, 144) aufweist:

    - einen plattenförmigen zentralen Teil (146, 148),
    - zwei seitliche Teile (150, 152, 154, 156), deren Ende vorgesehen ist, in Kontakt mit der Innenwand eines Rohrs zu kommen, entsprechend einer zu der Achse des Rohrs parallelen Zone.

12. Vorrichtung nach Anspruch 11, wobei der zentrale Teil aus einem magnetisch weichen Werkstoff besteht, der den Kern eines Elektromagneten bildet, oder aus einem magnetisch harten Werkstoff, der die Rolle eines Permanentmagneten spielt, oder aus einer Kombination der beiden.

13. Vorrichtung nach Anspruch 11, wobei der zentrale Teil (166, 168) durch magnetische Bleche gebildet wird.

14. Vorrichtung nach einem der Ansprüche 11 bis 13, wobei die seitlichen Teile (150, 152, 154, 156) durch magnetische Bleche (158, 160, 162, 164) gebildet werden.

15. Vorrichtung nach einem der Ansprüche 11 bis 13, wobei die seitlichen Teile (170, 172, 174, 176) aus Federn bildenden metallischen Elementen bestehen.

16. Vorrichtung nach einem der Ansprüche 11 bis 15, wobei Ausschnitte ( 78, 80) in wenigstens einem seitlichen Teil wenigstens eines Magnetkreises (144) angebracht sind.

17. Vorrichtung nach einem der Ansprüche 11 bis 16 mit zwei Magnetkreisen, wobei die beiden Kreise im wesentlichen parallel angeordnet sind.

18. Vorrichtung nach Anspruch 17, wenigstens eine weitere Sättigungseinheit (198, 206) entsprechend dem Anspruch 17 umfassend, wobei die verschiedenen Einheiten (196, 198, 206) auf einer gemeinsamen Achse angeordnet sind, mit einem bestimmten Abstand voneinander, und Empfangseinrichtungen (192, 204) sich in jedem freien Raum zwischen zwei benachbarten Sättigungseinheiten befinden.

19. Vorrichtung nach Anspruch 18, wobei die beiden Magnetkreise in jeder Sättigungseinheit so angeordnet sind, daß sie dieselbe magnetische Ausrichtung haben.

20. Vorrichtung nach Anspruch 19, wobei die magnetischen Ausrichtungen der beiden benachbarten Einheiten einen Winkel von 180° bilden.

21. Vorrichtung nach Anspruch 19, wobei die magnetischen Ausrichtungen der beiden benachbarten Einheiten einen Winkel von 90° bilden.

22. Vorrichtung nach Anspruch 18, wobei der Stromerzeuger (212) in Punkten (O, P), die sich auf einer Seite einer Sättigungseinheit (202) befinden, und in Punkten (Q, R), die sich auf der anderen Seite dieser Einheit (202) befinden, Kontakt hat mit der metallischen Wand.

FIG. 1

FIG. 2 A

FIG. 2 B

FIG. 3

FIG. 4 A

FIG. 4 B

FIG. 5A

FIG. 5 B

FIG. 5 C

116    120

142
150    152
146    148
154    156
144

FIG. 7a

112

114

FIG. 6a

144

178

180

112    118
116    120
122    124

FIG. 6b

FIG. 7b

FIG. 8 a

FIG. 8 b

# FIG. 9

# FIG. 12

FIG. 10a

FIG. 11a

FIG. 10b

FIG. 11b